Europäisches Patentamt

(19) European Patent Office

Office européen des brevets

(11) EP 0 586 696 B1

(12) FASCICULE DE BREVET EUROPEEN

(45) Date de publication et mention
de la délivrance du brevet:
**13.08.1997 Bulletin 1997/33**

(21) Numéro de dépôt: **93920546.4**

(22) Date de dépôt: **23.03.1993**

(51) Int Cl.6: **G05B 11/42**, G05B 19/29,
G05B 19/19

(86) Numéro de dépôt international:
**PCT/FR93/00289**

**WO 93/19408 (30.09.1993 Gazette 1993/24)**

(54) **DISPOSITIF DE COMMANDE DESTINE A ASSERVIR UN OBJET A UNE POSITION DONNEE**

Steuereinrichtung zur Positionierung eines Objektes in eine Soll-Lage

CONTROL DEVICE FOR MAINTAINING AN OBJECT IN A GIVEN POSITION

(84) Etats contractants désignés:
**DE ES FR GB IT NL SE**

(30) Priorité: **24.03.1992 FR 9203514**

(43) Date de publication de la demande:
**16.03.1994 Bulletin 1994/11**

(73) Titulaire: **ART TECH GIGADISC ATG
31047 Toulouse (FR)**

(72) Inventeur: **BEC, Daniel
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 362 801**      **DE-A- 3 118 259**
**DE-A- 3 719 581**      **US-A- 3 578 957**
**US-A- 4 577 271**      **US-A- 4 794 313**
**US-A- 4 893 068**

- **PATENT ABSTRACTS OF JAPAN vol. 12, no. 411
  (P-779)31 Octobre 1988 & JP-A-63 148 309**
- **Y.SEVELY, Systèmes et Asservissements
  linéaires échantillonnés, DUNOD Paris
  1973,pp.10-11,66-69.**

Remarques:
Le dossier contient des informations techniques
présentées postérieurement au dépôt de la
demande et ne figurant pas dans le présent
fascicule.

## Description

La présente invention concerne un dispositif de commande destiné à asservir un ou plusieurs objets à des positions données. Ces dispositifs sont généralement utilisés en robotique. On sait que dans de tels asservissements on cherche le meilleur compromis entre la précision du système qui permet à la grandeur asservie de se fixer effectivement à la valeur commandée, la stabilité du système qui évitera les oscillations autour de la valeur commandée, en particulier les phénomènes de pompage, et un temps de réponse convenable qui assurera une réponse rapide du système en cas de changement de la valeur commandée. Ces éléments sont connus et il est connu également de modifier le lieu de transfert du système par avance de phase (contrôle dérivé) et par retard de phase (contrôle intégral). Un exemple d'un tel asservissement est connu du brevet US 4 577 271. Le caractère principal de l'invention décrite dans ce document est que le mouvement nécessaire pour rejoindre une position commandée est divisée en plusieurs mouvements incrémentaux. Ces mouvements sont traités successivement. Le principal intérêt de l'invention est de faire travailler le microprocesseur de traitement sur des nombres entiers. Le traitement est ainsi plus rapide qu'en virgule flottante. La perte de précision qui résulte du traitement en nombre entier est rattrapée périodiquement par le fait qu'il est ajouté 1 au résultat de la division, chaque fois que la somme des restes des divisions précédentes devient supérieure au diviseur. Le brevet US-A- 4 794 313 décrit en la forme plus générale d'un asservissement de position. L'invention décrite dans ce document est une amélioration consistant à rendre programmable la fonction de transfert du système. A cette fin le dispositif est équipé de moyens permettant de prétraiter le signal d'erreur, par décalage et/ou multiplication par un coefficient C2.

D'autres coefficients par exemple C3 et C4 peuvent être appliqués respectivement à l'intégrale du signal d'erreur ou à sa dérivée par rapport au temps. On obtient ainsi un système facilement adaptable à différentes situations (colonne 3 ligne 50 - colonne 4 ligne 44).

Il fait enfin parti des connaissances générales de l'homme du métier, d'introduire dans un système asservi numérique des échantillonneurs ayant des fréquences d'échantillonnage différentes. En général, ces échantillonneurs à fréquences différentes sont situés l'un en entrée du système et l'autre en sortie après calcul, conformément à la fonction de transfert du système. Lorsque la sortie est échantillonnée à une fréquence plus basse que l'entrée on obtient un effet d'effacement des perturbations rapides. Dans le cas inverse on obtient un meilleur contrôle de l'organe de puissance. Des indications plus précises à ce sujet pourront être obtenues dans le manuel intitulé "Système et asservissements linéaires échantillonnés - par Y. Sévely, J.L. Abatut - F. Roubellat - Edition DUNOD".

La présente invention a pour objet un dispositif qui sous sa forme la plus élaborée s'apparente au dispositif décrit dans le brevet US-A 4 794 313.

Il peut intervenir, par exemple, pour commander des axes-moteurs. C'est cet exemple qui sera pris en considération par la suite. Il faut cependant noter que le dispositif de commande selon l'invention s'applique à l'asservissement de position de tout objet.

Un dispositif classique de commande d'axe-moteur comprend un asservissement de position et un asservissement de vitesse de l'axe-moteur.

L'asservissement de vitesse commande l'axe-moteur tant que la distance séparant la position réelle dudit axe de la position finale que celui-ci doit atteindre est supérieure à une valeur donnée. Quand cette distance atteint ladite valeur, c'est l'asservissement de position qui intervient.

Il y a donc commutation entre les deux types d'asservissement. Cette commutation présente des inconvénients dus à l'instabilité inhérente à cette transition.

L'existence de ces deux types d'asservissement et de la transition qui les lie nécessite des circuits et des algorithmes d'une grande complexité conduisant à des temps de calcul souvent très longs.

Afin de supprimer ces inconvénients, la Demanderesse a conçu un dispositif permettant d'asservir l'écart de position à une loi unique, ce qui permet de ce fait, de supprimer la commutation entre les deux types d'asservissement. On impose, par l'asservissement, une relation non linéaire entre l'écart de position et l'action du moteur. Il y a alors continuité dans les prises de décision permettant au dispositif d'atteindre l'objectif désiré. Si une partie du dispositif de commande est matérielle, l'essentiel est logiciel et utilise donc un microprocesseur. Que l'algorithme utilisé soit un algorithme de contrôle de position et de vitesse, comme dans les dispositifs classiques, ou un algorithme associé à une loi unique comme cela est mentionné ci-dessus, les dispositifs selon l'art antérieur traitent de la même manière les signaux reçus sans tenir compte de leur fréquence.

Les systèmes correcteurs habituels utilisent l'opération mathématique communément appelée "transformée en z". Comme cela est connu de l'homme de l'art, ces systèmes effectuent un échantillonnage à une seule fréquence. Les basses fréquences du signal étudié sont alors traitées au même rythme que les hautes fréquences.

Il résulte de ceci une perte de temps au niveau du microprocesseur, ce qui empêche, en conséquence, de commander plusieurs axes-moteurs en parallèle à l'aide du même microprocesseur, sauf à perdre en temps de réponse du dispositif de commande ou à employer un microprocesseur à fréquence d'horloge très élevée, donc onéreux.

L'invention ne présente pas cet inconvénient.

L'invention a pour objet un dispositif de commande destiné à asservir un objet à une position donnée, ledit dispositif comprenant un dispositif de comptage-décomptage permettant de fournir une adresse absolue en code binaire à partir de l'information de position de l'objet, un microprocesseur permettant de générer un signal de correction de position de l'objet à l'aide d'un algorithme d'asservissement, ledit algorithme permettant d'accomplir une suite d'opérations mathématiques à partir de l'adresse absolue, en particulier la comparaison de l'adresse à une consigne extérieure représentant ladite position donnée de façon à générer un signal d'écart de position, le calcul d'une loi fournissant un signal de position déduit de l'écart de position, la dérivation de l'écart de position suivie de la multiplication du résultat de ladite dérivation, l'intégration dudit écart de position, l'addition des résultats des opérations de calcul de ladite loi, de multiplication issue de la dérivation et d'intégration, un dispositif constitué d'un convertisseur numérique-analogique et d'un amplificateur, et un moteur commandé par ledit amplificateur, l'ensemble étant bouclé de façon que l'action du moteur fasse tendre la position de l'objet vers ladite position donnée. Dans ce dispositif l'opération de dérivation est précédée d'un échantillonnage à une fréquence F et le calcul de la loi fournissant le signal de position déduit de l'écart de position est précédé d'un échantillonnage à une fréquence F1 = F/R, R étant un nombre entier supérieur à 1. Ledit facteur multiplicatif de l'opération de multiplication est choisi préférentiellement égal R ; ledit nombre R est choisi préférentiellement de façon que l'avance de phase du signal résultant de l'opération d'addition par rapport au signal représentant l'écart de position soit sensiblement comprise entre 50° et 65°.

L'invention a aussi pour objet un dispositif de commande destiné à asservir la position de plusieurs objets. Ce dispositif comprend un seul microprocesseur permettant de générer un signal de correction de position de chaque objet à l'aide d'un même algorithme d'asservissement.

Un avantage de l'invention réside donc dans le fait que l'occupation d'un microprocesseur est optimisée en temps, permettant ainsi de commander plusieurs objets en parallèle.

Par la suite les objets considérés seront des axes-moteurs.

D'autres caractéristiques et avantages de l'invention apparaîtront à la lecture d'un mode de réalisation préférentiel, faite avec référence aux figures ci-annexées dans lesquelles :

- les figures 1A et 1B représentent respectivement le schéma synoptique de l'asservissement de vitesse et le schéma synoptique de l'asservissement de position d'un dispositif classique selon l'art antérieur ;
- la figure 2 représente le schéma synoptique du dispositif permettant d'asservir la position de l'axe-moteur à une loi unique ;
- la figure 3 représente la courbe décrivant la loi unique du dispositif selon la figure 2 ;
- la figure 4 représente le schéma synoptique d'un asservissement de l'écart de position utilisant une loi unique selon l'invention ;
- la figure 5 représente les courbes de l'avance de phase et du gain du filtre de compensation et de stabilité du dispositif selon l'invention décrit en figure 4 et du dispositif selon l'art antérieur décrit en figure 2 ;
- la figure 6 représente un exemple de réalisation de l'invention ;
- la figure 7 représente un compteur/décompteur fournissant une adresse partielle exprimée en code de Gray et utilisé dans un dispositif selon l'invention.
- la figure 8A représente la courbe de détermination des adresses absolues par extrapolation linéaire, dans le cas où le compteur/décompteur de la figure 7 ne fournit qu'une adresse partielle ;
- la figure 8B représente, de façon symbolique, un algorithme de détermination de l'adresse absolue dans le cas où le compteur/décompteur de la figure 7 ne fournit qu'une adresse partielle ;
- la figure 9 représente le schéma synoptique d'un dispositif suivant l'invention dans le cas où il contient un compteur/décompteur du type de celui décrit en figure 7 ;
- la figure 10A représente le diagramme des états internes et la table de changement d'état d'un compteur/décompteur cyclique à cinq états ;
- la figure 10B représente les signaux d'entrée, l'état interne correspondant et les signaux de sortie du compteur/décompteur cyclique à cinq états ;
- la figure 11 représente un dispositif suivant l'invention utilisant un compteur cyclique à cinq états.

Sur toutes les figures, les mêmes repères désignent les mêmes éléments.

Comme cela a été dit précédemment, l'essentiel du dispositif d'asservissement est réalisé à l'aide d'un microprocesseur.

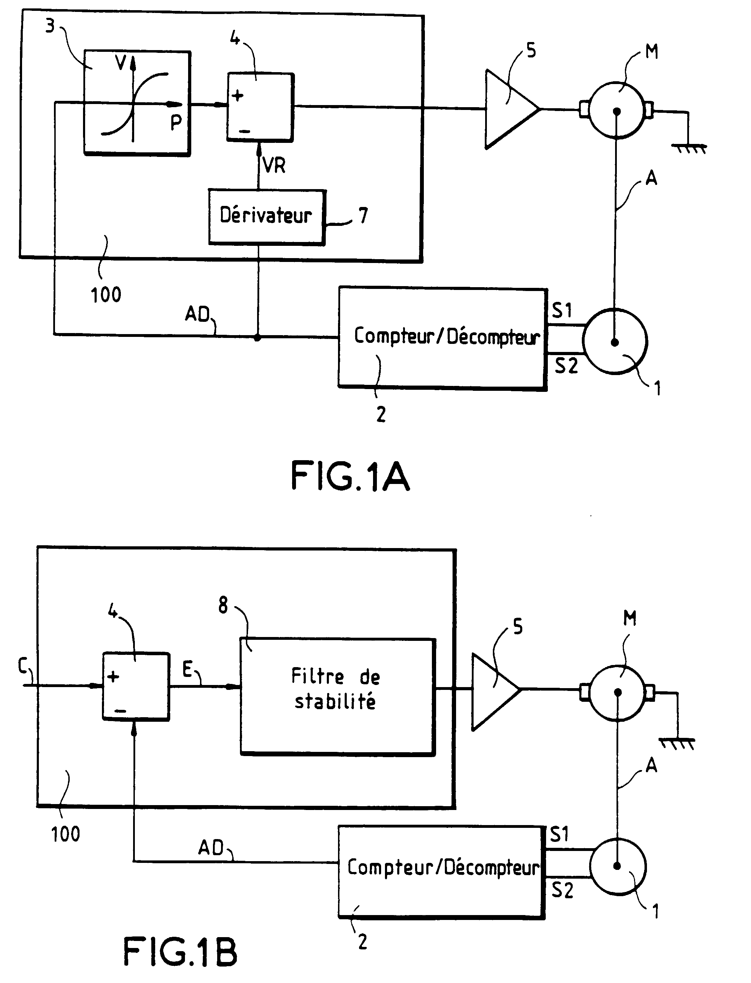

Ainsi, dans les schémas synoptiques des figures 1A, 1B, 2, 4, 9 et 11 chacun des dispositifs situés dans la zone 100, représente-t-il, de façon symbolique, une opération mathématique élémentaire de l'algorithme d'asservissement.

La figure 1A décrit le synoptique de l'asservissement de vitesse d'un dispositif classique selon l'art antérieur. Un codeur 1 recueille la position de l'axe-moteur A du moteur M. De façon générale, ce codeur est un codeur non absolu qui délivre deux signaux S1 et S2 en quadrature. Les codeurs absolus, fournissant une adresse absolue, ne sont généralement pas utilisés car ils sont beaucoup trop coûteux.

A partir de l'information fournie par les signaux S1 et S2, le compteur/décompteur 2 génère en code binaire, l'adresse absolue AD donnant la position P de l'axe-moteur commandé. Cette information est alors envoyée dans un dispositif 3 destiné à fournir la loi de vitesse $V = P \times (|P|)^{-1} \times \sqrt{|P|}$ où P est la position de l'axe-moteur, représentée par l'adresse absolue AD.

La grandeur V est alors comparée par l'intermédiaire du soustracteur 4 à la vitesse réelle VR du moteur qui est issue du dérivateur 7.

Le signal issu du comparateur 4 est envoyé dans le dispositif 5 constitué d'un convertisseur numérique-analogique, suivi d'un amplificateur dont le signal de sortie commande la vitesse de l'axe-moteur.

La figure 1B décrit le synoptique de l'asservissement de position d'un dispositif classique selon l'art antérieur. Comme cela a été mentionné plus haut, cet asservissement intervient quand la distance entre la position réelle de l'axe-moteur et la position finale que celui-ci doit atteindre passe par une valeur prédéterminée.

De même que dans le dispositif décrit ci-dessus la position de l'axe-moteur A est recueillie par un codeur 1. Ce codeur fournit les signaux S1 et S2 comme précédemment. De même, le compteur/décompteur 2 fournit la position absolue de l'axe-moteur en code binaire AD, ladite position étant comparée à l'aide du soustracteur 4 à la consigne de position C.

L'écart de position E issu du soustracteur 4 est envoyé dans le filtre de stabilité 8.

Il est connu de l'homme de l'art qu'une avance de phase est nécessaire afin de stabiliser la boucle d'asservissement. Ce filtre y pourvoie.

Le dispositif 5 alimente le moteur en puissance. L'ensemble des composants réels ou symboliques 1, 2, 4, 8, 5 et M forme une boucle telle que l'action du moteur tende à diminuer l'écart E.

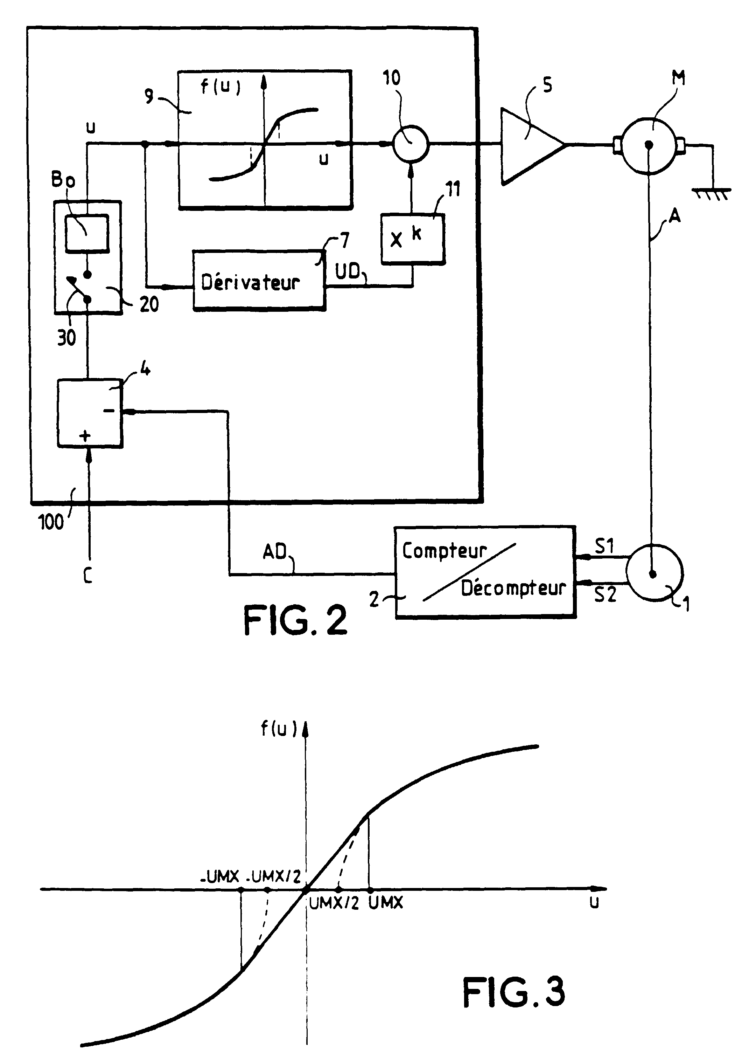

La figure 2 décrit le schéma synoptique du dispositif permettant d'asservir la position de l'axe-moteur à une loi unique, mais selon l'art antérieur, c'est-à-dire en échantillonnant le signal à une seule fréquence.

Un codeur non absolu 1 recueille la position de l'axe-moteur A et délivre deux signaux en quadrature S1 et S2, lesquels sont envoyés dans un compteur-décompteur 2.

L'adresse absolue AD issue du compteur-décompteur 2 et donnant la position de l'axe-moteur est envoyée dans un soustracteur 4, qui fournit en sortie l'écart de position E entre une consigne de position C et l'adresse absolue AD. Cet écart de position E est envoyé dans un échantillonneur-bloqueur 20. Ledit échantillonneur-bloqueur comprend un interrupteur 30 placé en série avec un bloqueur d'ordre zéro $B_o$ dont la fonction est de maintenir la valeur d'un signal échantillonné jusqu'à l'arrivée du signal échantillonné suivant, qui le remplace alors. Selon l'art antérieur, l'échantillonnage s'effectue à une seule fréquence notée F. Le signal U sortant de l'échantillonneur-bloqueur est ensuite envoyé à la fois dans un dispositif 9 qui fournit la loi unique f(U) et dans un dérivateur 7 qui fournit un signal égal à la dérivée de U par rapport au temps, noté UD.

Le sommateur 10 génère la quantité $f(U) + k \times UD$, le facteur multiplicatif k étant fourni par le multiplicateur 11.

La loi f(U) est détaillée en figure 3.

Quand la valeur absolue de U, notée |U|, est inférieure à une certaine quantité UMX il vient :

$$f(U) = U.$$

La valeur de k est déterminée de façon que l'asservissement de position ait la meilleure réponse comme cela est connu de l'homme de l'art. L'équation différentielle à résoudre se réduit alors à $U + k \times UD = 0$

Quand la valeur absolue de U est supérieure à UMX, il vient :

$$f(U) = \frac{U}{|U|} \sqrt{2UMX \times \left(U - \frac{UMX}{2}\right) \times \frac{U}{|U|}}$$

où UMX est un nombre réel positif choisi en fonction des caractéristiques du moteur qui produit l'action et de l'inertie de l'objet entraîné, incluant celle du moteur, afin de terminer l'accès avec décélération constante en toute sécurité, sans oscillations multiples. UMX peut être choisi par exemple de façon à terminer l'accès avec une décélération égale aux deux tiers de la décélération maximale que peut communiquer le moteur M à l'axe moteur A.

Ainsi retrouve-t-on, d'une part, une loi non linéaire, simililaire à celle utilisée pour la vitesse dans un cas classique, mais ici appliquée à l'écart de position, quand l'écart de position est élevé (|U| > UMX) et, d'autre part, une loi proportionnelle à U quand l'écart de position est faible (|U| < UMX).

Le dispositif 5 est le même que celui décrit précédemment en référence aux figures 1A et 1B.

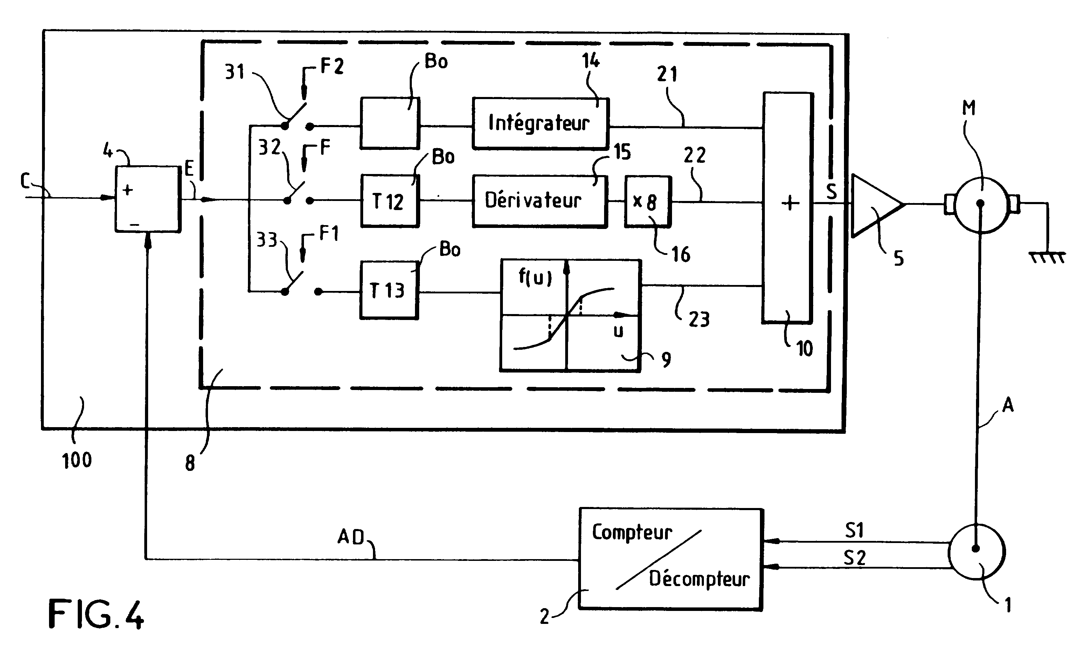

La figure 4 représente le schéma synoptique d'un asservissement de l'écart de position à une loi unique selon le mode de réalisation préférentiel de l'invention.

Comme cela a été mentionné plus haut, dans la zone 100, une opération mathématique est symboliquement représentée par un dispositif. Selon l'invention le dispositif symbolique représentant le filtre de stabilité 8 est constitué de 3 branches et d'un sommateur 10.

Une branche 23 comprend le dispositif 9 symbolisant la loi unique.

Une branche 22 dite "branche d'action dérivée" comprend le dérivateur 15 qui symbolise l'opération de dérivation.

Une branche 21 dite "branche d'action intégrale" comprend l'intégrateur 14 qui symbolise l'opération d'intégration.

Selon l'invention, le filtre 8 est échantillonné à plusieurs fréquences.

F étant la fréquence d'échantillonnage de la branche 22 d'action dérivée, alors, selon le mode de réalisation préférentiel, F1 = F/8 est la fréquence d'échantillonnage de la branche 23 qui contient le dispositif symbolisant la loi unique et F2 = F/64 est la fréquence d'échantillonnage de la branche 21 d'action intégrale.

De façon générale, pour une fréquence d'échantillonnage F de la branche d'action dérivée, la fréquence d'échantillonnage de la branche 23 est F1 = F/R , R étant un nombre entier supérieur à 1. De façon préférentielle R est choisi de façon que l'avance de phase du filtre de stabilité soit sensiblement comprise entre 50° et 65°. De façon préférentielle, la fréquence d'échantillonnage de la branche 21 est F2 = F/R$^2$, mais d'autres valeurs sont possibles.

Les échantillonnages des branches 21, 22 et 23 sont représentés respectivement par les interrupteurs 31, 32 et 33.

Outre le dérivateur 15, la branche 22 d'action dérivée comprend un bloqueur d'ordre zéro Bo dont la fonction de transfert est :

$$T12 = \frac{1 - e^{-i\omega T}}{i\omega}$$

avec T = 1/F, $\omega$ étant la pulsation, au sens de l'analyse de Fourrier, du signal associé à l'adresse échantillonnée, i étant le nombre mathématique imaginaire tel que i$^2$ = -1.

Cette branche contient aussi un multiplicateur 16 dont le facteur multiplicatif est, selon le mode de réalisation préférentiel, égal à 8.

De même, outre le dispositif symbolique 9 de loi unique, la branche 23 contient un bloqueur d'ordre zéro Bo dont la fonction de transfert est, selon le mode de réalisation préférentiel de l'invention :

$$T13 = \frac{1 - e^{-i\omega T/8}}{i\omega} \ .$$

Dans la branche 23, le dispositif 9 de loi unique décrit une loi f(U) identique à la loi unique mentionnée plus haut.

Outre le dispositif 9, la branche 23 contient aussi un filtre 13 de fonction de transfert T13.

Le fonctionnement de la boucle d'asservissement selon l'invention peut se décrire comme suit.

L'écart de position E est obtenu par la comparaison entre la consigne C et l'adresse absolue AD issue du compteur/décompteur 2.

L'interrupteur 31 de la branche d'action intégrale 21 n'est commandé au rythme de la fréquence d'échantillonnage F2 que lorsque la vitesse de l'axe-moteur est inférieure à une valeur donnée V1. Aux vitesses supérieures à la valeur V1, on garde en mémoire l'ancienne action intégrale que l'on réactualise quand on repasse aux vitesses inférieures à ladite valeur donnée. Le signal de commande de l'interrupteur 31 est issu d'une fonction logique non représentée sur la figure et comparant la vitesse de l'axe-moteur à la valeur V1. Si la vitesse de l'axe-moteur est supérieure à V1, l'interrupteur reste ouvert, sinon il est activé au rythme de la fréquence F2. L'information donnant la vitesse de l'axe-moteur est prélevée en sortie du dérivateur 15 par tout moyen connu de l'homme de l'art.

Pour les forts signaux, tels que |U|⟩UMX, le dispositif fonctionne de la même manière que ce qui a été vu pour l'asservissement de vitesse selon l'art antérieur en référence à la figure 2.

Un avantage de l'invention réside aussi dans le fait que le calcul de la racine carrée est effectué à la fréquence F1 = F/8 : le microprocesseur est sollicité huit fois moins souvent pour ce calcul et se trouve donc libre pour d'autres taches. Le calcul de la racine carrée étant une opération longue, une autre caractéristique de l'invention est la détermination de la racine carrée à l'aide d'une table de valeurs de taille faible ce qui conduit également à une diminution du temps de calcul.

En effet, tout nombre réel et positif x peut s'écrire x = r × 2$^{2q}$, où r est un nombre réel supérieur ou égal à 1 et inférieur à 4.

Il vient donc :

$$\sqrt{x} = \sqrt{r} \times 2^q$$

Une table contenant, par exemple, 32 valeurs de r est suffisante pour permettre des accès de qualité.

La multiplication par $2^q$ n'est, en binaire, qu'un décalage de la virgule de q positions ; c'est donc une opération rapide.

Pour les signaux faibles, tels que $|U| \langle UMX$, le filtre 8 est linéaire. Les trois branches 21, 22 et 23 sont prises en compte. Cependant en première approximation on peut se contenter de prendre en compte les branches 22 et 23, la branche 21 n'apportant qu'une faible correction excepté aux fréquences très basses. Le signal S récupéré en sortie de l'additionneur 10 peut alors s'écrire :

$$S = 8 \times \frac{(1 - e^{-i\omega T})^2}{i\omega} + \frac{1 - e^{-8i\omega T}}{i\omega}$$

Selon le mode de réalisation préférentiel de l'invention, la fréquence d'échantillonnage de la branche 23 est la fréquence F divisée par 8. De même, le multiplicateur 16 situé dans la branche 22 possède un facteur multiplicatif égal à 8.

Il est connu de l'homme de l'art qu'en continu, c'est-à-dire sans échantillonnage, ce facteur multiplicatif est de l'ordre de 10. Ici aussi le facteur 10 permettrait un mode de réalisation de l'invention. De façon générale la valeur du facteur multiplicatif est donc choisie égale à R, valeur du rapport des fréquences d'échantillonnage F et F1.

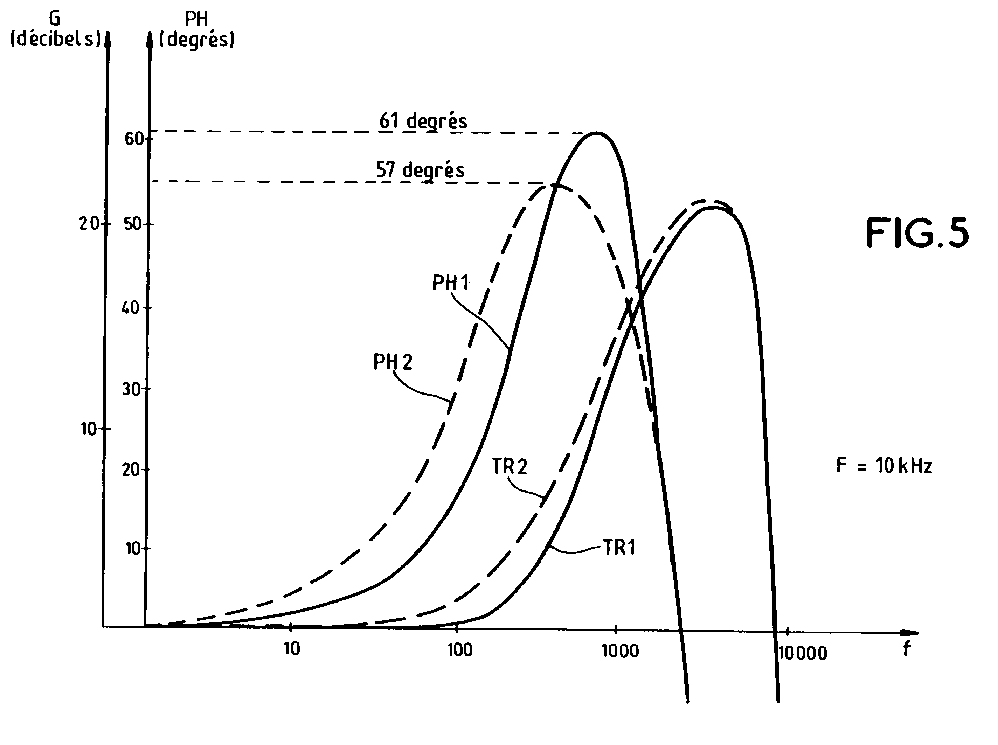

La figure 5 représente, pour les faibles signaux, $|U| < UMX$, les courbes donnant l'avance de phase PH et la fonction de transfert TR du filtre de stabilité selon l'invention et selon l'art antérieur, en fonction de la fréquence f du signal entrant dans ledit filtre. Les courbes en traits pleins (PH1, TR1) sont relatives au dispositif selon l'invention et les courbes en traits pointillés (PH2, TR2) sont relatives au dispositif selon l'art antérieur décrit en figure 2. La fréquence d'échantillonnage F est identique dans les deux cas. La valeur choisie est, par exemple, F = 10 kHz dans le cas d'un axe-moteur présentant une fréquence de coupure de l'ordre de 500 à 1000 Hz. Toute autre valeur compatible des signaux étudiés conduit à des résultats qualitativement identiques.

On constate que les courbes de gain TR1 et TR2 sont sensiblement identiques. Ainsi, l'avance de phase atteint-elle la valeur de 61 degrés selon l'invention alors qu'elle atteint 57 degrés selon l'art antérieur.

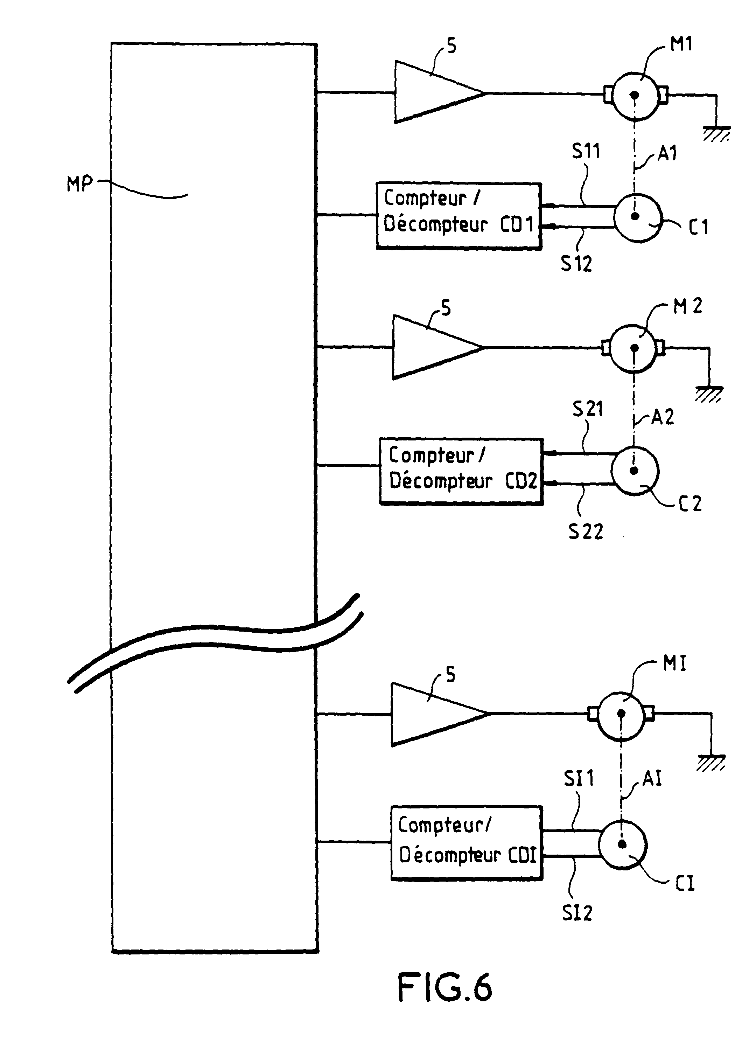

La figure 6 représente un exemple de réalisation de l'invention.

Un même microprocesseur MP commande, en parallèle, I moteurs Mi (i = 1, 2..., I), d'axes-moteurs respectifs Ai (i = 1, 2..., I). Grâce au gain de temps obtenu par l'échantillonnage et par le calcul de la loi unique selon l'invention, le même microprocesseur permet d'asservir la position de plusieurs axes-moteurs.

L'information sur la position de l'axe-moteur Ai est fournie par le codeur non absolu Ci (i = 1, 2,..., I) qui fournit les deux signaux en quadrature Si1 et Si2 (i = 1, 2,..., I).

Lesdits deux signaux sont alors envoyés dans un compteur/décompteur CDi (i = 1, 2,..., I) dont la fonction est de fournir, en code binaire, l'adresse absolue donnant la position de l'axe-moteur.

Dans les dispositifs décrits aux figures 4 et 6 les compteurs-décompteurs peuvent être choisis parmi ceux connus de l'homme de l'art. Chaque compteur-décompteur est alors constitué d'un premier sous-ensemble de circuits permettant d'obtenir la position de l'axe-moteur en code binaire et d'un deuxième sous-ensemble de circuits, ou registre de sortie, commandé en synchronisme avec les signaux S1 et S2. Les bits d'adresse absolue issus du compteur-décompteur sont alors envoyés dans le microprocesseur MP.

Le dispositif compteur-décompteur peut aussi être un dispositif selon l'invention de la demande de brevet ayant pour titre "Dispositif de comptage/décomptage" et déposée en France au nom de la Société ART TECH GIGADISC le 10 mars 1992.

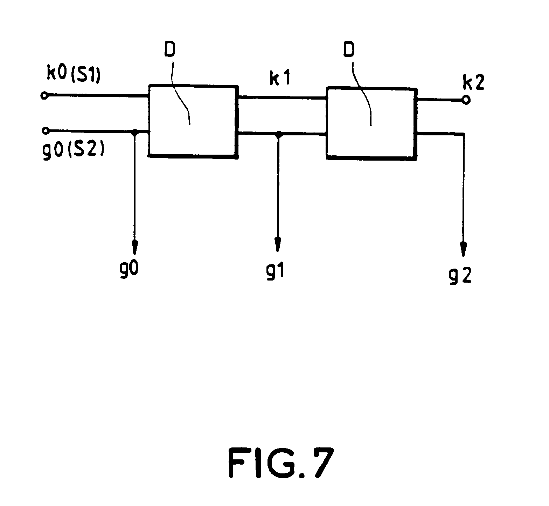

La figure 7 représente le schéma synoptique d'un compteur/décompteur selon l'invention mentionnée ci-dessus. Il a été dit précédemment que les compteurs/décompteurs selon l'art antérieur doivent comprendre un registre de sortie commandé en synchronisme avec les signaux issus du codeur de position. L'invention ne présente pas cet inconvénient car le code binaire utilisé change d'un seul bit d'une combinaison à l'autre. En effet, selon l'invention, la position absolue de l'axe-moteur est codée selon le code binaire réfléchi ou selon tout autre code équivalent. Cela permet donc non seulement de supprimer le registre de sortie mais aussi de prendre en compte à chaque instant le signal de sortie du compteur-décompteur sans avoir à attendre une fenêtre temporelle.

Pour mémoire, le tableau ci-dessous rappelle l'évolution du code binaire réfléchi ou code de Gray quand celui-ci est défini, par exemple, sur trois bits b2, b1, b0:

| b2 | b1 | b0 |
|----|----|----|
| 0 | 0 | 0 |
| 0 | 0 | 1 |
| 0 | 1 | 1 |
| 0 | 1 | 0 |
| 1 | 1 | 0 |
| 1 | 1 | 1 |
| 1 | 0 | 1 |
| 1 | 0 | 0 |

On voit que ce code suit une évolution telle qu'il y a changement d'un seul bit d'une combinaison à l'autre.

Le compteur/décompteur de la figure 7 fournit, suivant un mode préférentiel de l'invention mentionnée ci-dessus, une adresse partielle de 3 bits : g2, g1, g0, car, comme on le verra plus loin, il n'est pas nécessaire de transmettre toute l'adresse absolue mais seulement ses bits de plus faible poids.

Les deux signaux S1 et S2 issus du codeur de position sont ici notés k0, pour S1, et g0, pour S2.

Un dispositif D reçoit les deux signaux k0 et g0 et délivre les signaux k1 et g1. De même, un second dispositif D reçoit les deux signaux k1 et g1 et délivre les signaux k2 et g2 (k2 n'est pas utilisé).

Les circuits contenus dans les dispositifs D sont des circuits logiques combinés de façon que les différents signaux gi et ki (i = 0, 1, 2) soient reliés comme suit :

$$gi = \overline{g}(i\text{-}1) \bullet gi + g(i\text{-}1) \bullet (k(i\text{-}1) \oplus ki)$$

$$ki = g(i\text{-}1) \bullet ki + \overline{g}(i\text{-}1) \bullet (k(i\text{-}1) \oplus gi)$$

Dans les expressions ci-dessus $\overline{g}$ i représente le complément logique de g i. Les différentes opérations représentées symboliquement par les signes " $\bullet$ ", " + ", et " $\oplus$ " sont les fonctions connues de l'homme de l'art sous les noms respectifs "et", "ou" et "ou exclusif".

Selon le mode de réalisation décrit, les deux dispositifs D permettent de générer une adresse partielle de 3 bits. De façon générale, B - 1 dispositifs D permettent de générer une adresse partielle de B bits.

Selon l'invention mentionnée ci-dessus, il n'est pas nécessaire que le compteur-décompteur génère une adresse absolue pour créer l'information donnant la position de l'axe-moteur. Une adresse partielle suffit sous réserve de reconstituer l'adresse absolue.

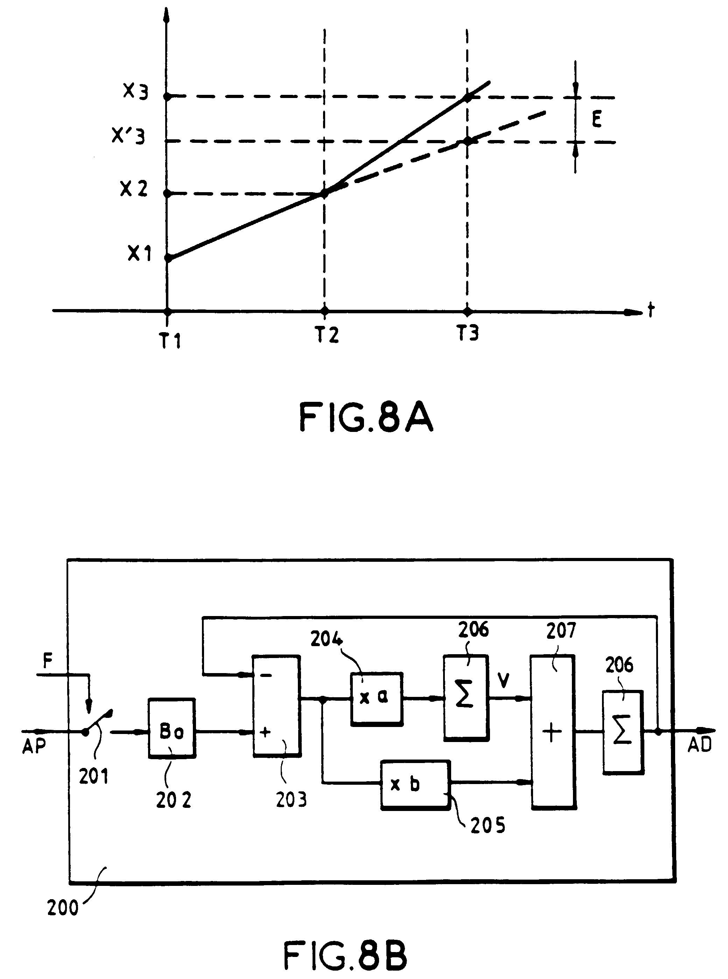

La figure 8A représente le principe de calcul d'un algorithme permettant de reconstituer l'adresse absolue par extrapolation linéaire. Cet algorithme est le plus simple démontrant la faisabilité de la restitution de l'adresse absolue à partir de ses bits de plus faible poids. Son principe est basé sur le fait que si l'on connaît le reste de la division modulo Q d'une grandeur X à chaque instant et si l'on connaît les deux premières adresses absolues X1 et X2, on peut en déduire les adresses absolues suivantes. Q représente la quantification de l'adresse partielle : pour 3 bits $Q = 2^3 = 8$.

Sur la courbe de la figure 8A l'adresse Xj (j = 1, 2, 3) est l'adresse absolue qui doit être fournie à l'instant Tj.

Les instants T1, T2, T3 sont tels que

$$T3 - T2 = T2 - T1 = T.$$

X'3 est l'extrapolation linéaire de X1 et X2.

Il vient donc :

$$X'3 - X2 = X2 - X1.$$

Soit :

$$X'3 = 2\ X2 - X1.$$

L'erreur E correspondant à l'écart entre l'adresse X3 à fournir et l'adresse X'3 obtenue par extrapolation linéaire est :

$$E = X3 - X'3$$

Soit :

$$E = X3 - 2 X2 + X1$$

Si E est inférieur à Q/2, alors :

$$E = (X3 \bmod Q - 2 X2 + X1) \bmod Q$$

Soit

$$E = (x3 - 2 X2 + X1) \bmod Q$$

avec x3 = X3 mod Q, x3 représentant la mesure des bits de plus faible poids.

$\gamma$ max étant l'accélération maximale de la grandeur X, l'erreur maximale E max que l'on peut avoir est :

$$E \max = \gamma \max \times T^2. \text{ Il faut donc } Q \rangle 2 \times \gamma \max \times T^2.$$

Dans ce cas, l'adresse X3 fournie s'écrit donc :

$$X3 = 2 X2 - X1 + (x3 - 2 X2 + X1) \bmod Q.$$

Les calculs décrits ci-dessus sont réalisés à l'aide d'un microprocesseur. Selon le mode de réalisation préférentiel choisi, ces calculs sont effectués par le microprocesseur calculant l'erreur de position de l'axe-moteur à commander.

En plus de la fonction d'extrapolation et de reconstruction de l'adresse absolue, l'algorithme selon l'invention permet de contrôler la vraissemblance des données. L'erreur E est alors comparée à une valeur de vraissemblance EV. La valeur EV est choisie petite devant E max. Si l'erreur E est inférieure ou égale à EV, l'algorithme se poursuit sans détour. Sinon la valeur de l'erreur E est forcée à zéro, permettant ainsi la suppression des échantillons aberrants.

La figure 8B représente, de façon symbolique, un autre algorithme permettant la reconstruction de l'adresse absolue. Cet algorithme est symboliquement représenté par le dispositif 200. A l'intérieur de ce dispositif symbolique, chaque opération mathématique est représentée par un dispositif symbolique élémentaire. Chacune de ces opérations élémentaires est connue de l'homme de l'art. On se contente de la rappeler pour effectuer une description complète de l'algorithme.

L'adresse partielle AP, constituée par les bits de plus faible poids de l'adresse absolue, est envoyée dans le dispositif symbolique 200 et l'adresse absolue AD est récupérée en sortie dudit dispositif. Les différents dispositifs symboliques élémentaires (201, 202, 203, 204, 205, 206, 207) sont combinés de façon que les adresses AP et AD soient reliées comme suit :

$$\frac{AD}{AP} = \frac{b \times \Sigma + a \times \Sigma^2}{1 + b \times \Sigma + a \times \Sigma^2}$$

avec

$$\Sigma = \frac{1}{1 - z^{-1}}$$

et, comme cela est connu de l'homme de l'art, $z = e^{i\omega T}$ $\omega$ étant la pulsation, au sens de l'analyse de Fourrier, du signal associé à l'adresse partielle AP

et $T = \frac{1}{F}$, F étant la fréquence d'échantillonnage du signal associé à l'adresse partielle AP, ledit échantillonnage étant symbolisé par l'interrupteur 201 et le maintien de la valeur de l'échantillon étant assuré jusqu'à l'arrivée de l'échantillon suivant par le dispositif 202.

Cet algorithme permet la modélisation et l'identification de la vitesse par moyennage exponentiel. Il faut noter qu'il amoindrit l'effet des échantillons entachés d'erreur à l'aide du filtrage qu'il opère sur lesdits échantillons.

Le multiplicateur 204, de facteur multiplicatif a, détermine le filtre passe-bas pour l'adresse absolue AD, alors que le multiplicateur 205, de facteur multiplicatif b, donne la constante de temps du filtre passe-bas de la vitesse.

Les dispositifs 206 symbolisent l'opération $\Sigma = \frac{1}{1 - z^{-1}}$, c'est-à-dire l'addition de la valeur de chaque échantillon nouveau, présent à l'entrée du dispositif, à la valeur qu'avait sa sortie au moment de l'arrivée de cet échantillon.

Enfin le dispositif 203 symbolise la différence effectuée entre les signaux provenant respectivement du second dispositif 206 et du dispositif 202, alors que le dispositif 207 symbolise la somme effectuée sur les deux signaux provenant respectivement du dispositif 202 et du premier dispositif 206.

Selon le mode de réalisation préférentiel de l'invention mentionnée ci-dessus, on reconstitue une adresse absolue complète de N bits à partir d'une adresse partielle de 3 bits issue du compteur-décompteur. L'information donnée par une adresse partielle de 2 bits est insuffisante car on ne peut lever l'ambiguïté sur la position de l'axe-moteur pour certaines valeurs précises de la vitesse. Pour plus de sécurité, en particulier en présence de bruit important sur le signal de position de l'axe-moteur, on peut être amené à augmenter la redondance de l'adresse partielle en augmentant son nombre de bits, par exemple en passant à 4 bits ou plus. Mais 3 bits suffisent en général, en l'absence de bruit important, pour reconstituer une adresse absolue quelconque complète avec un minimum de redondance.

Quel que soit l'algorithme de reconstruction de l'adresse absolue, l'initialisation des adresses absolues est faite à l'aide d'un senseur extérieur. Elle est faite, comme cela est connu de l'homme de l'art, à l'aide d'une butée de position connue, ladite position étant relevée à vitesse nulle.

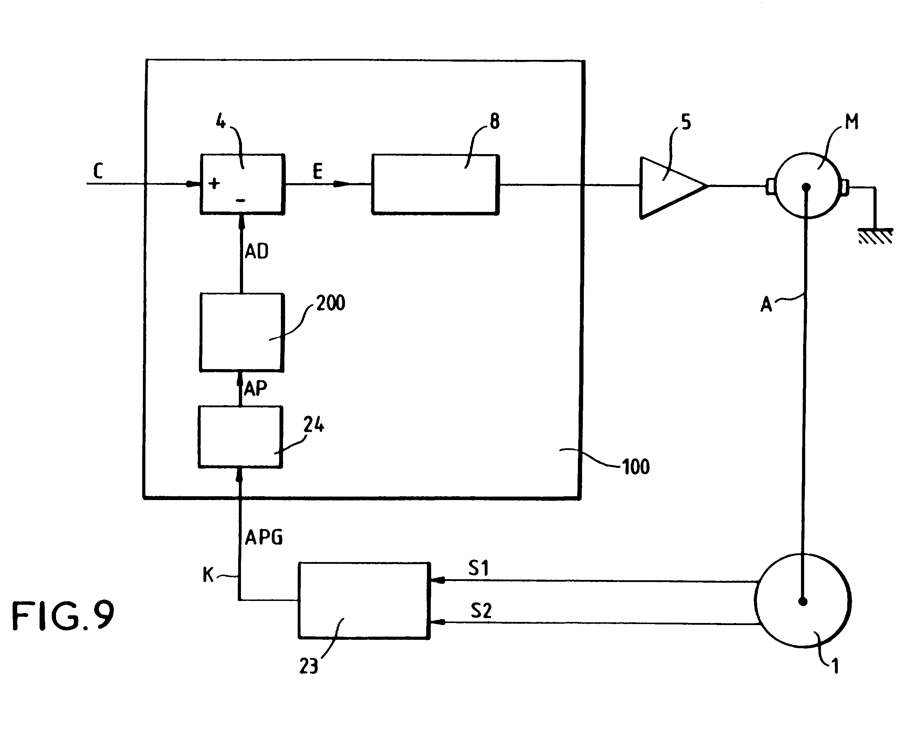

La figure 9 représente le schéma synoptique d'un asservissement de position selon l'invention et utilisant un dispositif compteur/décompteur selon le mode de réalisation préférentiel de l'invention mentionnée ci-dessus.

Le codeur 1 recueille la position de l'axe-moteur A et délivre les deux signaux S1 et S2 en quadrature. L'information issue du compteur/décompteur 23 est codée en code de Gray à l'aide, par exemple, de 3 bits.

Dans ces conditions, l'élément de câblage K est constitué de 3 fils reliés au microprocesseur 100. Il a été dit précédemment que 3 bits permettent de reconstituer une adresse absolue de N bits. Selon le mode de réalisation préférentiel de l'invention N = 24. C'est donc un avantage de l'invention mentionnée ci-dessus que de pouvoir transmettre en une seule fois et à n'importe quel instant l'information permettant de reconstituer l'adresse absolue à l'aide, par exemple, de 3 fils au lieu de 24.

L'élément de câblage K envoie l'adresse partielle codée en code de Gray APG, constituée préférentiellement des 3 bits g0, g1, g2, sur le dispositif 24, qui convertit ladite adresse partielle en une adresse partielle exprimée en binaire AP. Le dispositif 24 est connu de l'homme de l'art et n'est donc pas décrit.

L'algorithme 200 de reconstruction permet alors de générer l'adresse absolue de position qui, comparée à la consigne C, donne l'écart de position E.

Les dispositifs, 8 selon l'invention, et 5 sont les mêmes que ceux décrits en relation avec les figures précédentes.

Dans les algorithmes d'extrapolation et de reconstruction d'adresse absolue décrits précédemment la vitesse est calculée soit sur les deux échantillons connus précédant immédiatement le nouvel échantillon dont on veut extrapoler l'adresse comme cela est décrit en référence à la figure 8A, soit à partir de tous les échantillons précédents avec un moyennage de type exponentiel comme cela est utilisé dans l'extrapolation de l'adresse décrite en référence à la figure 8B. La vitesse peut aussi être calculée à partir de l'échantillon précédant immédiatement le nouvel échantillon, dont on veut extrapoler l'adresse, et d'un échantillon beaucoup plus ancien de façon à rendre l'imprécision de la vitesse moins sensible à l'imprécision de l'adresse des deux échantillons servant à la déterminer. Tout autre méthode combinant les adresses d'échantillons plus anciens à l'adresse du dernier échantillon connu pour obtenir une valeur de la vitesse est utilisable dans le dispositif suivant l'invention. Et il faut noter que la précision avec laquelle est connue ladite vitesse est plus importante que l'égalité de ladite vitesse à la vitesse réelle de l'objet au temps où elle est calculée, l'erreur systématique introduite sur ladite vitesse pouvant toujours être évaluée, majorée et prise en compte dans les limites de fonctionnement de l'algorithme.

Si l'on reprend les équations écrites dans le cas de l'extrapolation linéaire la plus simple décrite en référence à la figure 8A, il vient en y introduisant la vitesse V :

$$X'3 = X2 + V \times T$$

$$E = X3 - X2 - V \times T$$

L'incertitude absolue sur l'erreur E que l'on note $\Delta E$ est :

$$\Delta E = \Delta X_3 + \Delta X_2 + \Delta (V \times T)$$

Les valeurs des X étant quantifiées, les erreurs sur X3 et X2 sont donc égales à un pas de quantification que l'on prend comme unité, soit :

$$\Delta X_3 = \Delta X_2 = 1$$

Pour restituer l'adresse X3 sans ambiguïté il faut avoir :

$$Q > 2 (E \max + \Delta E),$$

soit

$$Q > 2 (\gamma \max \times T^2 + \Delta X_3 + \Delta X_2 + \Delta (V \times T)$$

$$\Delta (V \times T) = V \times \Delta T + T \times \Delta V \cong T \times \Delta V,$$

car la période d'échantillonnage est très précise : elle est fournie par l'horloge de référence de temps de tout le dispositif, qui peut être une horloge à quartz.

Il vient donc :

$$Q > 2 (\Delta X_3 + \Delta X_2) + 2 (\gamma \max \times T^2 + T \times \Delta V).$$

Avec les valeurs maximales de $\Delta X_2$ et $\Delta X_3$ il vient :

$$Q > 4 + 2 (\gamma \max \times T^2 + T \times \Delta V)$$

Avec une vitesse calculée de façon à limiter son imprécision provenant de l'imprécision des adresses absolues précédentes, et avec une accélération restant faible ou avec un échantillonnage à fréquence élevée, donc avec T petit, la quantité $2 (\gamma \max \times T^2 + T \times \Delta V)$ peut être maintenue bien inférieure à 1, si bien que pour pouvoir extrapoler sans ambiguïté l'adresse X3 il suffit de prendre $Q \geq 5$. Au lieu d'utiliser un compteur binaire on peut alors utiliser un compteur cyclique, dit en anneau. La valeur la plus faible utilisable étant $Q = 5$, on peut utiliser un compteur cyclique à cinq états.

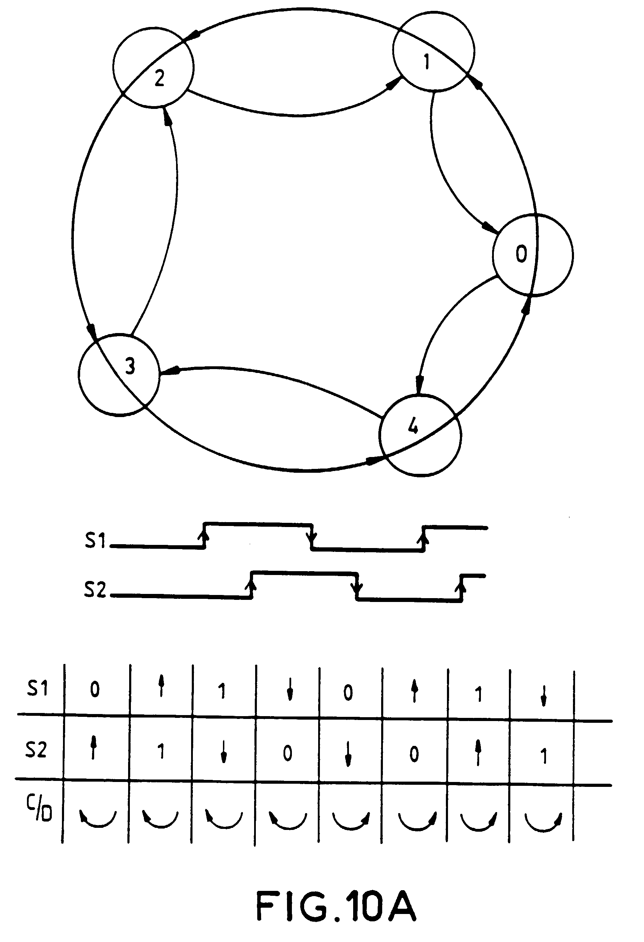

La figure 10A représente le diagramme des états internes ainsi que la table de fonctionnement d'un compteur-décompteur à cinq états. L'occurence d'un front de l'un des deux signaux S1 ou S2 provenant du codeur entraîne suivant l'état de l'autre signal une progression de l'état interne dudit codeur-décodeur dans le sens positif ou dans le sens négatif comme cela apparaît sur ladite table de fonctionnement.

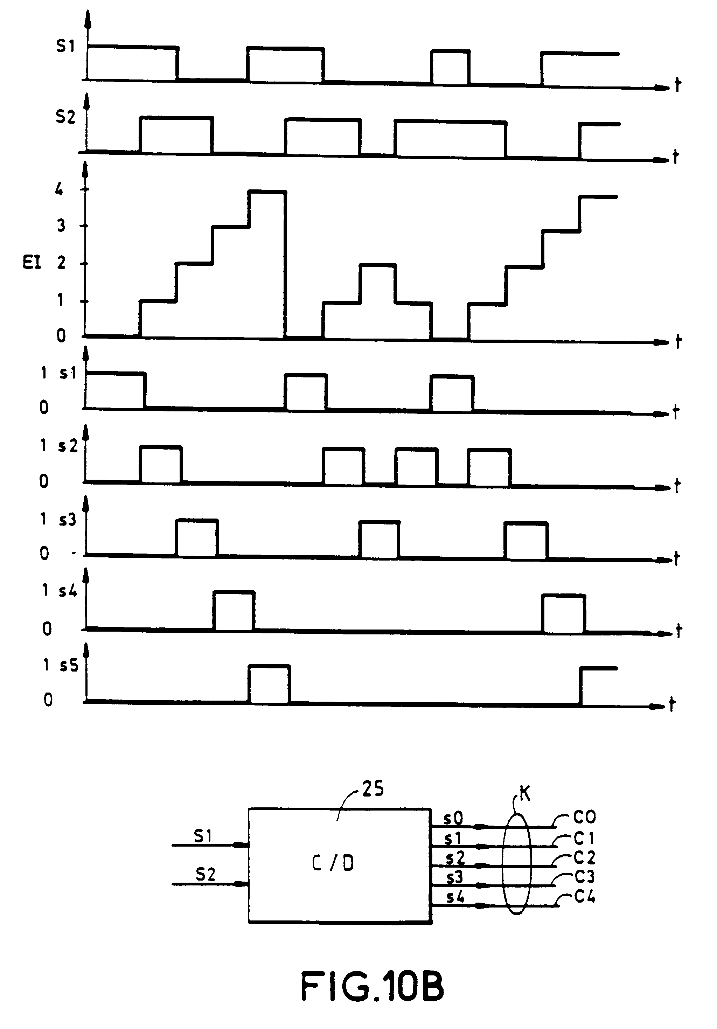

La figure 10B représente pour deux signaux S1 et S2 provenant du codeur (1) entrant dans le compteur-décompteur 25, l'état interne EI correspondant dudit compteur-décompteur et les signaux de sortie dans le cas où l'on utilise un élément de câblage K à cinq conducteurs C0, C1, C2, C3, et C4 pour transmettre les cinq positions élémentaires de l'adresse partielle vers le microprocesseur. Ce choix est judicieux quand on veut à la fois vitesse et précision dans le positionnement d'un objet : par exemple un axe-moteur à mouvement rapide doté d'un codeur dont la graduation présente un grand nombre de marques par tour. La durée de transmission de l'adresse partielle vers le microprocesseur gérant la position de l'axe-moteur est alors minimisée. Les cinq signaux s0, s1, s2, s3, et s4 portés respectivement par les conducteurs C0, C1, C2, C3 et C4 représentent chacun l'état du compteur 25 portant la même référence (0, 1, 2, 3, 4). Pour avoir la possibilité, comme dans le cas du code de Gray, de pouvoir échantillonner l'adresse venant du compteur-décompteur à tout instant, les signaux si (i = 0, 1, 2, 3, 4) sont prolongés légèrement au-delà du temps de changement d'état du compteur-décompteur de façon à ne jamais avoir un niveau 0 sur les cinq conducteurs simultanément ; on peut convenir, en cas de présence simultanée de deux signaux si au niveau 1, de choisir celui qui correspond au premier état rencontré dans le sens positif des changements d'état du compteur-décompteur. Ainsi 0 prime-t-il sur 1, 1 sur 2, 2 sur 3, 3 sur 4 et 4 sur 0. Dans ces conditions, comme dans le cas du code de Gray l'erreur est au plus d'un pas de quantification du codeur.

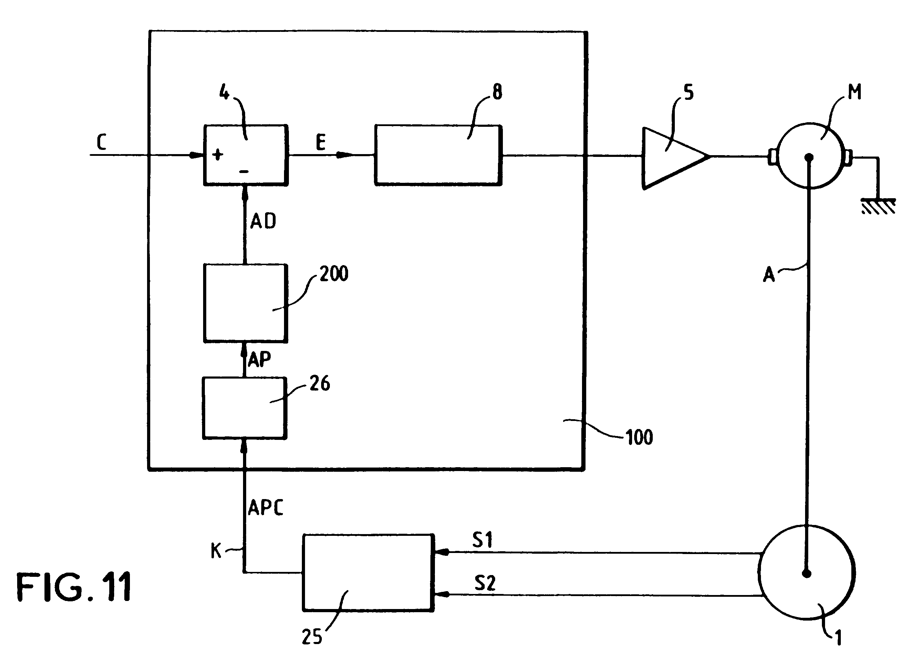

La figure 11 représente le schéma synoptique d'un asservissement de position suivant l'invention utilisant un dispositif compteur-décompteur selon un second mode de réalisation de l'invention mentionnée ci-dessus. Ce dispositif ne diffère du précédent que par le compteur-décompteur. Un compteur-décompteur cyclique 25 du même type que celui décrit précédemment (cf. figures 10A et 10B) est utilisé. Un dispositif 26 permet de convertir en adresse partielle AP exprimée en code binaire l'adresse partielle APC générée par le compteur-décompteur. Ce dispositif est connu de l'homme de l'art et il est inutile de le décrire dans la présente demande. Le reste de la description est identique à ce qui a été décrit en figure 9.

Au lieu d'effectuer une conversion de l'adresse partielle APC en adresse partielle AP binaire, il est possible pour l'homme de l'art, de concevoir un calcul par le microprocesseur pour convertir directement l'adresse APC en adresse absolue binaire AD. Cela permet alors de bénéficier au mieux de la simultanéité de la précision et de la vitesse d'asservissement de l'axe-moteur.

**Revendications**

1. Dispositif de commande de la position d'au moins un moteur (M, $M_1...M_i$), la position de chaque moteur déterminant la position d'un objet, le dispositif comportant connecté à chacun des moteurs (M, $M_1$, $M_2$, $M_i$) un codeur (1, $C_1$, $C_2,...C_i$) et connectée à chacun des codeurs une chaine (2, 100, MP, 5) chaque chaine (2, 100, MP, 5) applicant à chacun des moteurs un signal de correction de la position du moteur commandé par cette chaine, chaque chaine comportant à cet effet des moyens de réception d'une consigne extérieure (C) et un soustracteur (4) établissant à partir de la consigne de commande de chaque moteur et d'une information en provenance du codeur de ce moteur un signal d'écart de position, une pluralité de voies (21, 22, 23), comportant chacune un moyen d'échantillonnage (31, 32, 33 B0), chacun des moyens d'échantillonnage (31, 32, 33, B0) recevant le signal d'écart, et chacune des voies réalisant un degré différent de differentiation, un sommateur (10), recevant les signaux de sorties des dites voies (21, 22, 23) de degré de differentiation différent, un amplificateur (5) recevant le signal en sortie du sommateur (10) chaque amplificateur (5) émettant le signal de contrôle du moteur (M, $M_1$, $M_2$, $M_i$) qui lui est associé, dispositif caractérisé en ce que les prises d'échantillons de chacune des voies d'une chaine (21, 22, 23) de commande associée à un moteur (M, $M_1$, $M_2$, $M_i$) sont effectuées à des fréquences différentes, les unes des autres.

2. Dispositif selon la revendication 1, caractérisé en ce qu'une première (22) de chacune des voies de chacune des chaines est une voie comportant un moyen de dérivation (15) du signal d'écart de position, et en ce qu'une deuxième des voies est une voie fournissant un signal de position à partir du signal d'écart de position.

3. Dispositif selon la revendication 2, caractérisé en ce que l'échantillonnage (32, Bo) de la voie permettant de dériver le signal d'écart de position est effectué à une fréquence F, en ce que le signal issu de la dérivation est multiplié par un facteur R, R étant un nombre entier supérieur à 1, et en ce que l'échantillonnage (33, Bo) de la voie (23) fournissant un signal de position est effectué à une fréquence F1 = F/R.

4. Dispositif selon la revendication 3 caractérisé en ce que la voie fournissant un signal de position contient un dispositif (9) permettant d'appliquer au signal issu du dispositif d'échantillonnage qu'elle contient une loi f(u) telle que :

$$f(U) = \frac{U}{|U|}\sqrt{2UMX \times \left(U - \frac{UMX}{2}\right) \times \frac{U}{|U|}}$$

pour

$$|U| > UMX$$

et

$$f\,|U| = U$$

pour

$$|U| \leq UMX$$

où U est la variable représentant le signal issu de l'échantillonnage de l'écart de position à la fréquence F1 et UMX est un nombre réel positif choisi en fonction des caractéristiques du moteur qui produit l'action et de l'inertie de l'objet entraîné.

5. Dispositif selon la revendication 4 caractérisé en ce qu'il comporte pour chacun des moteurs $(M, M_1, M_2...M_i)$ à commander un compteur décompteur $(2, CD_1, CD_2, CD_i)$ permettant de générer une adresse absolue (AD) en code binaire à partir du signal reçu du codeur $(1, C_1, C_2, ...C_i)$ associé à ce moteur, ce compteur décompteur alimentant le soustracteur (4).

6. Dispositif selon la revendication 4, caractérisé en ce qu'il comporte pour chacun des moteurs $(M, M_1, M_2, ..M_i)$ à commander un compteur décompteur (25, 27) permettant de générer à partir du signal reçu du codeur $(1, C_1, C_2... C_i)$ associé à ce moteur, une première adresse partielle (APG, APC) exprimée dans un code différent du code binaire et limitée aux bits de plus faible poids de l'adresse absolue (AD).

7. Dispositif selon la revendication 5 caractérisée en ce que le soustracteur (4) permettant d'établir le signal d'écart entre la consigne C et l'adresse absolue reçue du compteur décompteur $(2, CD_1...CD_i)$, la pluralité de voies (21, 22, 23) de degré de différentitation différents, et le sommateur (10), sont pour chacun des moteurs réalisés au moyen d'un microprocesseur (100).

8. Dispositif selon la revendication 6, caractérisé en ce que le soustracteur (4) permettant d'établir le signal d'écart à partir de la consigne C et de la première adresse partielle (APG, APC) exprimée dans une code différent du code binaire, la pluralité de voies (21, 22, 23) de degré de différentiation différents, le sommateur (10), sont pour chacun des moteurs réalisés au moyen d'un microprocesseur (100) contenant des moyens (24, 26, 200) permettant de transformer ladite première adresse partielle en une adresse absolue.

9. Dispositif selon la revendication 8, caractérisé en ce que les moyens (24, 26, 200) permettant de transformer la première adresse partielle en adresse absolue comprennent des premiers moyens (24, 26) destinés à convertir la première adresse partielle (APG, APC) en une deuxième adresse partielle (AP) exprimée en code binaire et des seconds moyens (200) permettant de reconstituer l'adresse absolue (AD) à partir de la deuxième adresse partielle (AP) à l'aide d'un algorithme de reconstruction.

10. Dispositif selon la revendication 9, caractérisé en ce que le compteur-décompteur (23) permettant de générer une première adresse partielle (APG) comprend B - 1 sous-ensembles (D), le sous-ensemble de rang i (i = 1, 2,... B - 1) générant deux signaux (gi, ki) à partir des deux signaux issus du sous-ensemble de rang i - 1 qui le précède, l'un (gi) des deux signaux générés par le sous-ensemble de rang i constituant le bit de rang i de ladite première adresse partielle exprimée en code binaire réfléchi, le sous-ensemble de rang 1 ayant pour signal d'entrée deux signaux (S1, S2) issus du codeur de position.

11. Dispositif selon la revendication 9, caractérisé en ce que le compteur-décompteur (25) permettant de générer une première adresse partielle (APC) comprend un compteur-cyclique à au moins cinq états.

12. Dispositif selon l'une quelconque des revendications 9 à 11, caractérisé en ce que l'algorithme de reconstruction de l'adresse absolue (AD) est un algorithme d'extrapolation linéaire.

13. Dispositif selon l'une quelconque des revendications 9 à 11, caractérisé en ce que l'algorithme de reconstruction de l'adresse absolue AD à partir de l'adresse partielle AP est un algorithme de modélisation et d'identification de la vitesse de l'objet par moyennage exponentiel tel que :

$$\frac{AD}{AP} = \frac{b \times \Sigma + a \times \Sigma^2}{1 + b \times \Sigma + a \times \Sigma^2}$$

avec

$$\Sigma = \frac{1}{1 - z^{-1}}$$

et

$$Z = e^{iwT}$$

w étant la pulsation, au sens de l'analyse de Fourier, du signal associé à l'adresse partielle AP,

et $T = \frac{1}{F}$, F étant la fréquence d'échantillonnage du signal associé à l'adresse partielle AP.

**14.** Dispositif selon la revendication 12, caractérisé en ce que l'algorithme de reconstruction comprend un algorithme permettant de contrôler la vraisemblance des données brutes représentant la mesure des bits de plus faible poids de l'adresse absolue.

**15.** Dispositif selon l'une quelconque des revendications précédentes, caractérisé en ce qu'il comprend une voie (21) permettant l'opération d'intégration du signal d'écart de position.

**16.** Dispositif selon la revendication 15, caractérisé en ce que l'opération d'intégration est précédée d'une opération d'échantillonnage à une fréquence $F2 = F/R^2$ et en ce que cette opération n'est effectuée que lorsque la vitesse de l'objet est inférieure à une valeur donnée (V1).

**17.** Dispositif selon la revendication 7 caractérisé en ce que le microprocesseur (100) générant pour chacun des moteurs, le signal de correction de la position de ce moteur est le même pour l'ensemble des moteurs, le signal de correction étant pour chaque moteur réalisé par ce microprocesseur unique au moyen d'un algorithme d'asservissement identique pour chacun des moteurs ledit algorithme comportant en plus du calcul du signal d'écart entre la valeur de consigne et l'adresse absolue, de la dérivation (15) de l'écart de position, et de sa multiplication, et du calcul de la position à partir de l'écart de position et de l'application à ce dernier signal de la loi f(u), une intégration (14) de l'écart de position, le sommateur (10) effectuant l'addition pour chacun des moteurs des résultats des opérations de multiplication, de la dérivation, de l'écart, et de l'intégration.

**18.** Dispositif selon la revendication 8 caractérisé en ce que le microprecesseur (100) générant pour chacun des moteurs, le signal de correction de la position de ce moteur est le même pour l'ensemble des moteurs, le signal de correction étant pour chaque moteur réalisé par ce microprocesseur unique au moyen d'un algorithme d'asservissement identique pour chacun des moteurs, ledit algorithme comportant en plus du calcul du signal d'écart entre la valeur de consigne et l'adresse absolue, de la dérivation (15) de l'écart de position et de sa multiplication, et du calcul de la position à partir de l'écart de position et de l'application à ce dernier signal de la loi f(u), une intégration (14) de l'écart de position, le sommateur (10) effectuant l'addition pour chacun des moteurs des résultats des opérations de multiplication, de la dérivation, de l'écart, et de l'intégration.

**19.** Dispositif selon l'une quelconque des revendications 4 à 18, caractérisé en ce que le calcul de la racine carrée de la loi f(u) est réalisé à l'aide d'une table de valeurs fournissant un nombre fini de valeurs d'un nombre $\sqrt{r}$ tel que $1 \le r < 4$.

**20.** Dispositif selon l'une quelconque des revendications 3 à 19, caractérisé en ce que le facteur R est choisi de façon que la phase du signal issu du sommateur (10) soit en avance de sensiblement 50° à 65° par rapport à la phase du signal d'écart de position.

**21.** Dispositif selon l'une quelconque des revendications 3 à 20, caractérisé en ce que R = 8.

**Patentansprüche**

1. Einrichtung zur Steuerung der Lage wenigstens eines Motors (M, $M_1...M_i$), wobei die Lage jedes Motors die Lage eines Objekts bestimmt, wobei die Einrichtung in Verbindung mit jedem der Motoren (M, $M_1$, $M_2$, $M_i$) einen Kodierer (1, $C_1$, $C_2$,..$C_i$) und in Verbindung mit jedem der Kodierer eine Kette (2, 100, MP, 5) aufweist, wobei jede Kette (2, 100, MP, 5) an jeden der Motoren ein Korrektursignal für die Lage des durch diese Kette gesteuerten Motors anlegt, wobei jede Kette hierzu folgendes aufweist: Empfangsmittel für eine äußere Vorgabe (C) und ein Subtrahierglied (4), das aus der Steuervorgabe jedes Motors und aus einer von dem Kodierer dieses Motors kommende Information ein Lageabweichungssignal erzeugt, eine Mehrzahl von Zweigen (21, 22, 23), von denen jeder ein Abtastmittel (31, 32, 33, B0) aufweist, wobei jedes der Abtastmittel (31, 32, 33, B0) das Abweichungssignal empfängt und jeder der Zweige einen unterschiedlichen Differentiationsgrad realisiert, einem Summierglied (10), das die Ausgangssignale der Zweige (21, 22, 23) mit unterschiedlichem Differentiationsgrad empfängt, einen Verstärker (5), der das Ausgangssignal des Summierglieds (10) empfängt, wobei jeder Verstärker (5) das Steuersignal für den Motor (M, $M_1$, $M_2$, $M_i$) abgibt, der ihm zugeordnet ist, wobei die Einrichtung dadurch gekennzeichnet ist, daß die Abtastungen jedes der Zweige einer einem Motor (M, $M_1$, $M_2$, $M_i$) zugeordneten Steuerkette (21, 22, 23) mit zueinander unterschiedlichen Frequenzen durchgeführt werden.

2. Einrichtung nach Anspruch 1, dadurch gekennzeichnet, daß ein erster der Zweige jeder Kette ein Mittel (15) zum Ableiten des Lageabweichungssignals aufweist, und daß ein zweiter der Zweige ein Zweig ist, der auf der Grundlage des Lageabweichungssignals ein Lagesignal bereitstellt.

3. Einrichtung nach Anspruch 2, dadurch gekennzeichnet, daß die Abtastung (32, Bo) des Zweiges, der es gestattet, das Lageabweichungssignal abzuleiten, mit einer Frequenz F durchgeführt wird, daß das von der Ableitung stammende Signal mit einem Faktor R multipliziert wird, wobei R eine ganze Zahl größer 1 ist, und daß die Abtastung (33, Bo) des Zweiges (23), der ein Lagesignal bereitstellt, mit einer Frequenz F1 = F/R durchgeführt wird.

4. Einrichtung nach Anspruch 3, dadurch gekennzeichnet, daß der Zweig, der ein Lagesignal bereitstellt, eine Einrichtung (9) enthält, die es gestattet, auf das Signal, das von der Abtasteinrichtung stammt, die er enthält, eine Regel f (U) anzuwenden, die lautet:

$$f(U) = \frac{U}{|U|} \sqrt{2UMX \times \left(U - \frac{UMX}{2}\right) \times \frac{U}{|U|}}$$

für

$$|U| > UMX$$

und

$$f\,|U| = U$$

für

$$|U| \leq UMX$$

wobei U die Variable ist, die das von der Abtastung der Lageabweichung mit der Frequenz F1 stammende Signal ist und UMX eine reelle, positive Zahl ist, die in Abhängigkeit von den Eigenschaften des Motors, der die Bewegung erzeugt, und der Trägheit des angetriebenen Objekts gewählt wird.

5. Einrichtung nach Anspruch 4, dadurch gekennzeichnet, daß sie für jeden zu steuernden Motor (M, $M_1$, $M_2$...$M_i$) einen Vorwärts-Rückwärts-Zähler (2, $CD_1$, $CD_2$, $CD_i$) aufweist, der es gestattet, auf der Grundlage des Signals, das von dem diesem Motor zugeordneten Kodierer (1, $C_1$, $C_2$...$C_i$) empfangen wird, eine absolute Adresse (AD) in binärem Kode zu erzeugen, wobei dieser Vorwärts-Rückwärts-Zähler das Subtrahierglied (4) versorgt.

6. Einrichtung nach Anspruch 4, dadurch gekennzeichnet, daß sie für jeden zu steuernden Motor (M, $M_1$, $M_2$...$M_i$) einen Vorwärts-Rückwärts-Zähler (25, 27) aufweist, der es gestattet, auf der Grundlage des Signals, das von dem diesem Motor zugeordneten Kodierer (1, $C_1$, $C_2$...$C_i$) empfangen wird, eine erste Teiladresse (APG, APC) zu erzeugen, die in einem von dem binären Kode unterschiedlichen Kode ausgedrückt ist und auf die geringerwertigen Bit der absoluten Adresse (AD) beschränkt ist.

7. Einrichtung nach Anspruch 5, dadurch gekennzeichnet, daß das Subtrahierglied (4), das es gestattet, das Abweichungssignal zwischen der Vorgabe C und der vom Vorwärts-Rückwärts-Zähler (2, $CD_1$...$CD_i$) empfangenen absoluten Adresse zu ermitteln, die Mehrzahl der Zweige (21, 22, 23) mit unterschiedlichem Differentiationsgrad und das Summierglied (10) für jeden der Motoren mittels eines Mikroprozessors (100) realisiert sind.

8. Einrichtung nach Anspruch 6, dadurch gekennzeichnet, daß das Subtrahierglied (4), das es gestattet, das Abweichungssignal aus der Vorgabe C und der ersten Teiladresse (APG, APC) zu ermitteln, die in einem von dem binären Kode unterschiedlichen Kode ausgedrückt ist, die Mehrzahl der Zweige (21, 22, 23) mit unterschiedlichem Differentiationsgrad, das Summierglied (10) für jeden der Motoren mittels eines Mikroprozessors (100) realisiert werden, der Mittel (24, 26, 200) enthält, die es gestatten, die erste Teiladresse in eine absolute Adresse umzuwandeln.

9. Einrichtung nach Anspruch 8, dadurch gekennzeichnet, daß die Mittel (24, 26, 200), die es gestatten, die erste Teiladresse in eine absolute Adresse umzuwandeln, erste Mittel (24, 26) aufweisen, die dazu bestimmt sind, die erste Teiladresse (APG, APC) in eine zweite Teiladresse (AP) umzuwandeln, die im binären Kode ausgedruckt wird, und zweite Mittel (200), die es gestatten, die absolute Adresse (AD) aus der zweiten Teiladresse (AP) mittels eines Rekonstruktionsalgorithmus wiederherzustellen.

10. Einrichtung nach Anspruch 9, dadurch gekennzeichnet, daß der Vorwärts-Rückwärts-Zähler (23), der es gestattet, eine erste Teiladresse (AP) zu erzeugen, B-1 Untereinheiten (D) aufweist, wobei die Untereinheit mit Rang i (i = 1, 2,... B-1) aus den zwei Signalen, die aus der Untereinheit mit Rang i-1, die ihr vorausgeht, stammen, zwei Signale (gi, ki) erzeugt, wobei eines (gi) der beiden von der Untereinheit mit Rang i erzeugten Signale das Bit mit Rang i der ersten Teiladresse bildet, die im betrachteten binären Kode ausgedrückt wird, wobei die Untereinheit mit Rang 1 als Eingangssignal zwei von dem Lagekodierer stammende Signale (S1, S2) hat.

11. Einrichtung nach Anspruch 9, dadurch gekennzeichnet, daß der Vorwärts-Rückwärts-Zähler (25), der es gestattet, eine erste Teiladresse (APC) zu erzeugen, einen zyklischen Zähler mit wenigstens fünf Zuständen aufweist.

12. Einrichtung nach einem der Ansprüche 9 bis 11, dadurch gekennzeichnet, daß der Algorithmus zur Rekonstruktion der absoluten Adresse (AD) ein linearer Extrapolationsalgorithmus ist.

13. Einrichtung nach einem der Ansprüche 9 bis 11, dadurch gekennzeichnet, daß der Algorithmus zur Rekonstruktion der absoluten Adresse AD aus der Teiladresse AP ein Algorithmus für die Nachbildung und Identifizierung der Geschwindigkeit des Objekts durch exponentielle Mittelung ist mit:

$$\frac{AD}{AP} = \frac{b \times \Sigma + a \times \Sigma^2}{1 + b \times \Sigma + a \times \Sigma^2}$$

mit

$$\Sigma = \frac{1}{1 - z^{-1}}$$

und

$$Z = e^{iwT}$$

wobei w die Kreisfrequenz, im Sinne der Fourieranalyse, des Signals ist, das der Teiladresse AP zugeordnet ist,

und $T = \frac{1}{F}$, wobei F die Abtastfrequenz des Signals ist, das der Teiladresse AP zugeordnet ist.

14. Einrichtung nach Anspruch 12, dadurch gekennzeichnet, daß der Rekonstruktionsalgorithmus einen Algorithmus aufweist, der es gestattet, die Wahrscheinlichkeit der Rohdaten zu kontrollieren, die das Maß der geringerwertigen Bit der absoluten Adresse darstellen.

15. Einrichtung nach einem der vorhergehenden Ansprüche, dadurch gekennzeichnet, daß sie einen Zweig (21) aufweist, der die Integration des Lageabweichungssignals gestattet.

16. Einrichtung nach Anspruch 15, dadurch gekennzeichnet, daß der Integration ein Abtastungsvorgang mit einer Frequenz F2 = F/R² vorangeht, und daß dieser Vorgang nicht durchgeführt wird, wenn die Geschwindigkeit des Objekts kleiner als ein Richtwert (V1) ist.

17. Einrichtung nach Anspruch 7, dadurch gekennzeichnet, daß der Mikroprozessor (100), der für jeden der Motoren das Lagekorrektursignal dieses Motors erzeugt, derselbe für die Gesamtheit der Motoren ist, wobei das Korrektursignal für jeden Motor durch diesen einzigen Mikroprozessor mittels eines für jeden der Motoren identischen Nachsteuerungsalgorithmus realisiert wird, wobei dieser Algorithmus außerdem folgendes umfaßt: die Berechnung des Signals der Abweichung zwischen dem Vorgabewert und der absoluten Adresse, die Ableitung (15) der Lageabweichung und ihre Multiplikation und die Berechnung der Lage aus der Lageabweichung und die Anwendung der Regel f(U) auf dieses letzte Signal, eine Integration (14) der Lageabweichung, wobei das Summierglied (10) für jeden Motor die Addition der Ergebnisse der Multiplikations-, der Ableitungs-, der Abweichungs- und der Integrationsvorgänge durchführt.

18. Einrichtung nach Anspruch 8, dadurch gekennzeichnet, daß der Mikroprozessor (100), der für jeden der Motoren das Lagekorrektursignal dieses Motors erzeugt, derselbe für die Gesamtheit der Motoren ist, wobei das Korrektursignal für jeden Motor durch diesen einzigen Mikroprozessor mittels eines für jeden der Motoren identischen Nachsteuerungsalgorithmus realisiert wird, wobei dieser Algorithmus außerdem folgendes umfaßt: die Berechnung des Signals der Abweichung zwischen dem Vorgabewert und der absoluten Adresse, die Ableitung (15) der Lageabweichung und ihre Multiplikation und die Berechnung der Lage aus der Lageabweichung und die Anwendung der Regel f(U) auf dieses letzte Signal, eine Integration (14) der Lageabweichung, wobei das Summierglied (10) für jeden Motor die Addition der Ergebnisse der Multiplikations-, der Ableitungs-, der Abweichungs- und der Integrationsvorgänge durchführt.

19. Einrichtung nach einem der Ansprüche 4 bis 18, dadurch gekennzeichnet, daß die Berechnung der Quadratwurzel der Regel f(U) mittels einer Wertetabelle realisiert wird, die eine endliche Anzahl von Werten einer Zahl $\sqrt{r}$ mit $1 \leq r < 4$ bereitstellt.

20. Einrichtung nach einem der Ansprüche 3 bis 19, dadurch gekennzeichnet, daß der Faktor R so gewählt wird, daß die Phase des von dem Summierglied (10) stammenden Signals im wesentlichen um 50° bis 60° der Phase des Lageabweichungssignals voreilt.

21. Einrichtung nach einem der Ansprüche 3 bis 20, dadurch gekennzeichnet, daß R = 8.

## Claims

1. Device for controlling the position of at least one motor (M, $M_1$...$M_i$), the position of each motor determining the position of an object, the device including connected to each of the motors (M, $M_1$, $M_2$, $M_i$) a coder (1, $C_1$, $C_2$,... $C_i$) and connected to each of the coders a rig (2, 100, MP, 5) each rig (2, 100, MP, 5) applying to each of the motors a signal for correcting the position of the motor controlled by this rig, each rig including for this purpose means of receiving an external set-point (C) and a subtractor (4) establishing a position discrepancy signal on the basis of the set-point for controlling each motor and an item of information originating from the coder of this motor, a plurality of paths (21, 22, 23), each including a sampling means (31, 32, 33 B0), each of the sampling means (31, 32, 33, B0) receiving the discrepancy signal, and each of the paths effecting a different degree of differentiation, a summing unit (10), receiving the output signals from the said paths (21, 22, 23) of different degree of differentiation, an amplifier (5) receiving the output signal from the summing unit (10) each amplifier (5) outputting the signal for controlling the motor (M, $M_1$, $M_2$, $M_i$) associated therewith, device characterized in that the captures of samples of each of the paths of a control rig (21, 22, 23) associated with a motor (M, $M_1$, $M_2$, $M_i$) are performed at frequencies which differ from one another.

2. Device according to Claim 1, characterized in that a first (22) of each of the paths of each of the rigs is a path including a means (15) of differentiating the position discrepancy signal, and in that a second of the paths is a path providing a position signal from the position discrepancy signal.

3. Device according to Claim 2, characterized in that the sampling (32, Bo) of the path enabling the position discrepancy signal to be differentiated is performed at a frequency F, in that the signal arising from the differentiation is multiplied by a factor R, R being an integer greater than 1, and in that the sampling (33, Bo) of the path (23) providing a position signal is performed at a frequency $F1 = F/R$.

4. Device according to Claim 3, characterized in that the path providing a position signal contains a device (9) allowing application to the signal leaving the sampling device which it contains of a law f(u) such that:

$$f(U) = \frac{U}{|U|} \sqrt{2\,UMX \times \left( U - \frac{UMX}{2} \right) \times \frac{U}{|U|}}$$

for

$$|U| > UMX$$

and

$$f\,|U| = U$$

for

$$|U| \leq UMX$$

where U is the variable representing the signal leaving the sampling of the position discrepancy at the frequency F1 and UMX is a positive real number chosen as a function of the characteristics of the motor which produces the action and of the inertia of the driven object.

5. Device according to Claim 4, characterized in that it includes for each of the motors $(M, M_1, M_2...M_i)$ to be controlled a forward/backward counter $(2, CD_1, CD_2, Cd_i)$ making it possible to generate an absolute address (AD) in binary code from the signal received from the coder $(1, C_1, C_2 ...C_i)$ associated with this motor, this forward/backward counter supplying the subtractor (4).

6. Device according to Claim 4, characterized in that it includes for each of the motors $(M, M_1, M_2, ..M_i)$ to be controlled a forward/backward counter (25, 27) making it possible to generate from the signal received from the coder $(1, C_1, C_2...C_i)$ associated with this motor, a first partial address (APG, APC) expressed in a code different from the binary code and limited to the lowest order bits of the absolute address (AD).

7. Device according to Claim 5, characterized in that the subtractor (4) making it possible to establish the signal of discrepancy between the set-point C and the absolute address received from the forward/backward counter (2, $CD_1...CD_i$), the plurality of paths (21, 22, 23) of different degree of differentiation, and the summing unit (10), are for each of the motors embodied by means of a microprocessor (100).

8. Device according to Claim 6, characterized in that the subtractor (4) making it possible to establish the discrepancy signal from the set-point C and from the first partial address (APG, APC) expressed in a code different from the binary code, the plurality of paths (21, 22, 23) of different degree of differentiation, the summing unit (10), are for each of the motors embodied by means of a microprocessor (100) containing means (24, 26, 200) making it possible to transform the said first partial address into an absolute address.

9. Device according to Claim 8, characterized in that the means (24, 26, 200) enabling the first partial address to be transformed into an absolute address comprise means (24, 26) intended for converting the first partial address (APG, APC) into a second partial address (AP) expressed in binary code and second means (200) enabling the absolute address (AD) to be reconstructed from the second partial address (AP) with the aid of a reconstruction algorithm.

10. Device according to Claim 9, characterized in that the forward/backward counter (23) allowing generation of a first partial address (APG) comprises B - 1 sub-assemblies (D), the sub-assembly of rank i (i = 1, 2 ..., B-1) generating two signals (gi, ki) from the two signals leaving the sub-assembly of rank i - 1 which precedes it, one (gi) of the two signals generated by the sub-assembly of rank i constituting the bit of rank i of the said first partial address expressed in reflected binary code, the sub-assembly of rank 1 having the two signals (S1, S2) leaving the position coder as input signal.

11. Device according to Claim 9, characterized in that the forward/backward counter (25) allowing generation of a first partial address (APC) comprises a cyclic counter with at least five states.

12. Device according to any one of Claims 9 to 11, characterized in that the algorithm for reconstructing the absolute address (AD) is a linear extrapolation algorithm.

13. Device according to any one of Claims 9 to 11, characterized in that the algorithm for reconstructing the absolute address AD from the partial address AP is an algorithm for modelling and identifying the speed of the object by exponential averaging such that:

$$\frac{AD}{AP} = \frac{b \times \Sigma + a \times \Sigma^2}{1 + b \times \Sigma + a \times \Sigma^2}$$

with

$$\Sigma = \frac{1}{1 - z^{-1}}$$

and

$$Z = e^{iwT}$$

w being the pulsatance, in the Fourier analysis sense, of the signal associated with the partial address AP,

and T = 1/F, F being the frequency for sampling the signal associated with the partial address AP.

14. Device according to Claim 12, characterized in that the reconstruction algorithm comprises an algorithm allowing the monitoring of the likelihood of the raw data representing the measure of the lowest order bits of the absolute address.

15. Device according to any one of the preceding claims, characterized in that it comprises a path (21) allowing the operation for integration of the position discrepancy signal.

16. Device according to Claim 15, characterized in that the integration operation is preceded by an operation for sampling at a frequency $F2 = F/R^2$ and in that this operation is performed only when the speed of the object is below a given value (V1).

17. Device according to Claim 7, characterized in that the microprocessor (100) generating for each of the motors, the signal for correcting the position of this motor is the same for all the motors, the correction signal being for each motor effected by this single microprocessor by means of a servocontrol algorithm which is identical for each of the motors the said algorithm including as well as the computation of the signal of discrepancy between the set-point value and the absolute address, the differentiation (15) of the position discrepancy, and its multiplication, and the computation of the position on the basis of the position discrepancy and the application to this latter signal of the law f(u), an integration (14) of the position discrepancy, the summing unit (10) performing the addition for each of the motors of the results of the operations of multiplication, the differentiation, the discrepancy, and the integration.

18. Device according to Claim 8, characterized in that the microprocessor (100) generating for each of the motors, the signal for correcting the position of this motor is the same for all the motors, the correction signal being for each motor effected by this single microprocessor by means of a servocontrol algorithm which is identical for each of the motors, the said algorithm including as well as the computation of the signal of discrepancy between the set-point value and the absolute address, the differentiation (15) of the position discrepancy, and its multiplication, and the computation of the position on the basis of the position discrepancy and the application to this latter signal of the law f(u), an integration (14) of the position discrepancy, the summing unit (10) performing the addition for each of the motors of the results of the operations of multiplication, the differentiation, the discrepancy, and the integration.

19. Device according to any one of Claims 4 to 18, characterised in that the computation of the square root of the law f (u) is carried out with the aid of a table of values providing a finite number of values of a number $\sqrt{r}$ such that $1 \leq r < 4$.

20. Device according to any one of Claims 3 to 19, characterized in that the factor R is chosen so that the phase of the signal leaving the summing unit (10) is substantially 50° to 65° in advance of the phase of the position discrepancy signal.

21. Device according to any one of Claims 3 to 20, characterized in that R = 8.

**FIG.1A**

**FIG.1B**

EP 0 586 696 B1

FIG. 2

FIG.3

21

FIG.4

FIG.5

FIG.6

FIG.7

# FIG.8A

# FIG.8B

FIG.9

EP 0 586 696 B1

FIG.10A

FIG.10B

FIG. 11

EP 0 586 696 B1